# EUROPEAN PATENT APPLICATION

(11) **EP 4 079 643 A1**
(43) Date of publication of application: **26.10.2022**
(21) Application number: 21170215.4
(22) Date of filing: 23.04.2021
(51) Int. Cl.: B64G 1/64

(54) **A SEPARATION ADAPTER AND METHOD FOR ATTACHING A PAYLOAD ONTO A PAYLOAD DISPENSER**

(71) Applicant: RUAG Space AB, 405 15 Göteborg (SE)
(72) Inventor: THENANDER, Magnus, 582 44 Linköping (SE); ÖHLIN, Johan, 590 44 Rimfosa (SE)
(74) Representative: Zacco Sweden AB

(57) **Abstract**

A separation adapter (200) for attaching a payload (100) onto a payload dispenser (300) is provided. The separation adapter (200) comprise a rigid structure (201) comprising: a plurality of payload attachment means (210, 211, 212, 213), wherein each payload attachment means (210, 211, 212, 213) operates separately from the other payload attachments means (210, 211, 212, 213) and is adapted to securely fasten the payload (100) to the rigid structure (201) in a releasable manner, and at least one payload dispenser attachment means (220), wherein the at least one payload dispenser attachment means (220) is adapted to securely attach the rigid structure (201) to the payload dispenser (300) in a non-releasable fixed manner. A method for attaching a payload (100) onto a payload dispenser (300) using a separation adapter (200) and a payload dispenser (300) for carrying a payload (100) of a satellite launch vehicle are also provided.

## Description

### TECHNICAL FIELD

Embodiments herein relate in general to the attachment of a payload onto a payload dispenser. In particular, embodiments herein relate to a separation adapter for attaching a payload onto a payload dispenser. Also, the embodiments herein also relate to a method for attaching a payload onto a payload dispenser and a payload dispenser for carrying a payload of a satellite launch vehicle are also provided.

### BACKGROUND

The preparation and integration of multiple satellites, which also may be referred to as payloads or space payloads, onto a dispenser/launcher, e.g. a payload dispenser for attachment to a stage of a space launch vehicle, is traditionally an intricate and time consuming task. Typically the amount of time needed to integrate one satellite onto the dispenser/launcher is many hours. For a large dispenser intended for launch of constellation satellites the number of satellites in a launch may be up to and above 100. This amounts to approximately 10 weeks integration time doing it the classical way.

Furthermore, traditional clamp band separation designs are configured to attach a single payload onto a stage of space launch vehicle, and may include an adapter arranged therein between. However, such designs are not feasible to use when having a satellite constellation arrangement, i.e. attaching multiple payloads onto a dispenser. Instead, satellite constellation arrangements usually involve a large amount of single mechanical and electrical interfaces located on both the payload and the dispenser, which may all require to be manually couple or connected together. Hence, one main reason for the long assembly time of the payloads is therefore the time spend on connection or connecting all the mechanical and electrical interfaces on the payload and the payload dispenser with each other. Hence, there is a need to find an improved assembly of payloads onto a payload dispenser.

### SUMMARY

It is therefore an object of the present disclosure to provide a separation adapter and a method for attaching a payload onto a payload dispenser using the separation adapter that seeks to mitigate, alleviate or eliminate all or at least some of the above-discussed drawbacks of presently known solutions. This and other objects are achieved by means of a separation adapter, a method and a satellite launch vehicle as defined in the appended claims. The term exemplary is in the present context to be understood as serving as an instance, example or illustration.

According to a first aspect of embodiments herein, a separation adapter for attaching a payload onto a payload dispenser is provided. The separation adapter comprise a rigid structure comprising: a plurality of payload attachment means, wherein each payload attachment means operates separately from the other payload attachments means and is adapted to securely fasten the payload to the rigid structure in a releasable manner, and at least one payload dispenser attachment means, wherein the at least one payload dispenser attachment means is adapted to securely attach the rigid structure to the payload dispenser in a non-releasable fixed manner.

By introducing a separation adapter as described above, most of the mechanical and electrical interfaces may be integrated in the separation adapter instead of onto the payload and the payload dispenser, thereby minimizing the number of interfaces needed on both the payload and the payload dispenser, thus simplifying the payload, the payload dispenser and also the attachment of the payload onto the payload dispenser. This may significantly reduce the amount of time needed to integrate the payload onto the payload dispenser.

In some embodiments, the at least one payload dispenser attachment means may comprise one or more apertures or threaded holes in the rigid structure arranged to engage with corresponding second separation adapter attachment means located on the payload dispenser. In some embodiments, the at least one payload dispenser attachment means may be arranged to engage with corresponding second separation adapter attachment means located on the payload dispenser by a snap-fit mechanism. Both of the above options provide an easy and simple way of attaching the separation adapter onto the payload dispenser.

In some embodiments, the rigid structure may further comprise a plurality of holding portions, wherein the plurality of holding portions allows the rigid structure to be manually or mechanically lifted together with the payload in a secure manner after the payload has been securely fastened to the rigid structure. Here, according to some embodiments, each of the plurality of holding portions may protrude from one or more side portions of the rigid structure, wherein each of the plurality of holding portions are configured to engage with and be supported by a corresponding plurality of holding portions on a pair of rails of a mounting tool. This improves the movability and easy handling and lifting of the separation adapter, even after the payload has been attached thereto.

In some embodiments, the plurality of payload attachment means may be arranged to release the payload simultaneously via a central activation arrangement. Here, according to some embodiments, the central activation arrangement may comprise a central relaxation means connected to each of the payload attachment means via a tension wire arrangement. In this case, according to some embodiments, the central relaxation means may be arranged to relax the tension wire arrangement upon receiving a trigger signal via a communication link. Also, in some embodiments, the communication link may comprise a communication interface adapted to be connected to an umbilical connector cable, and/or a communication interface adapted to receive the trigger signal over a wireless communication interface. Additionally, in some embodiments, each payload attachment means is adapted to release a part of the payload attachment means that is fastened to the payload as the tension wire arrangement is relaxed. Some advantages with this central activation arrangement according to the embodiments above is that the number of activation arrangements that needs to be implemented, conventionally individual pyrotechnical initiators for each attachment point, is reduced. This means that besides incurring less costs and reducing assembly lead time, it also increases the reliability and safety of the payload release procedure, as well as, reduces any chock or disruption forces that may be imposed onto the normally sensitive payload.

In some embodiments, one or more separation springs may be adapted to exert a push-off force onto the payload once the payload has been securely fastened to the rigid structure. This alternative provide a simple way of achieving a push-off force onto the payload from the separation adapter remaining attached to the payload dispenser after separation. Optionally, in some embodiments, one or more releasable electric and data connections may be configured to be connected to the payload 100, and one or more non-releasable electric and data connections configured to be connected to the payload dispenser 300.

In some embodiments, the payload may be a satellite, constellation satellite or satellite arrangement, and the payload dispenser may be, or forms part of, a stage of satellite launch vehicle.

According to a second aspect of embodiments herein, the object is achieved by a method for attaching a payload onto a payload dispenser using a separation adapter as described above. The method comprises fastening a plurality of payload attachment means of the separation adapter to a plurality of first separation adapter attachment means located on the payload in a releasable manner. The method also comprises, subsequent to the fastening, attaching the separation adapter carrying the payload onto the payload dispenser via at least one payload dispenser attachment means and corresponding second separation adapter attachment means in a non-releasable fixed manner. In some embodiments, the method may comprise the step of, prior to the attaching, suspending the separation adapter carrying the payload, via a corresponding plurality of holding portions of the separation adapter, onto a plurality of holding portions on a pair of rails of a mounting tool.

According to a third aspect of the embodiments herein, the object is achieved by a payload dispenser for carrying a payload of a satellite launch vehicle, wherein the payload dispenser is configured to be attached to a separation adapter as described above.

### BRIEF DESCRIPTION OF THE DRAWINGS

Features and advantages of the embodiments will become readily apparent to those skilled in the art by the following detailed description of exemplary embodiments thereof with reference to the accompanying drawings, wherein:
- Fig. 1: illustrates separation adapter for attaching a payload onto a payload dispenser according to some embodiments,
- Fig. 2: shows an example of a separation adapter according to some embodiments,
- Fig. 3: shows an example of a separation adapter and a central activation arrangement according to some embodiments,
- Fig. 4: shows another example of a separation adapter and central activation arrangement according to some embodiments,
- Fig. 5: shows a further example of a separation adapter and central activation arrangement according to some embodiments,
- Fig. 6: is a flowchart of a method according to some embodiments,
- Fig. 7A: is a schematic illustration of how the payload is mounted onto the separation adapter and attached to the payload dispenser,
- Fig. 7B: is a schematic illustration of how the payload is attached to the separation adapter and the payload dispenser before release,
- Fig. 7C: is a schematic illustration of how the payload is separated from the separation adapter and the payload dispenser after release,
- Fig. 8: is a schematic illustration of a mounting tool adapted to carry a separation adapter according to some embodiments.

### DETAILED DESCRIPTION

The foregoing will be apparent from the following more particular description of the example embodiments, as illustrated in the accompanying drawings in which like reference characters refer to the same parts throughout the different views. The drawings are not necessarily to scale, emphasis instead being placed upon illustrating the example embodiments. It should also be noted that since the figures are schematic and simplified for the sake of clarity, some details included in the figures may not be essential, but have been included in order to aid in the understanding of the embodiments presented herein, while other details may have been left out.

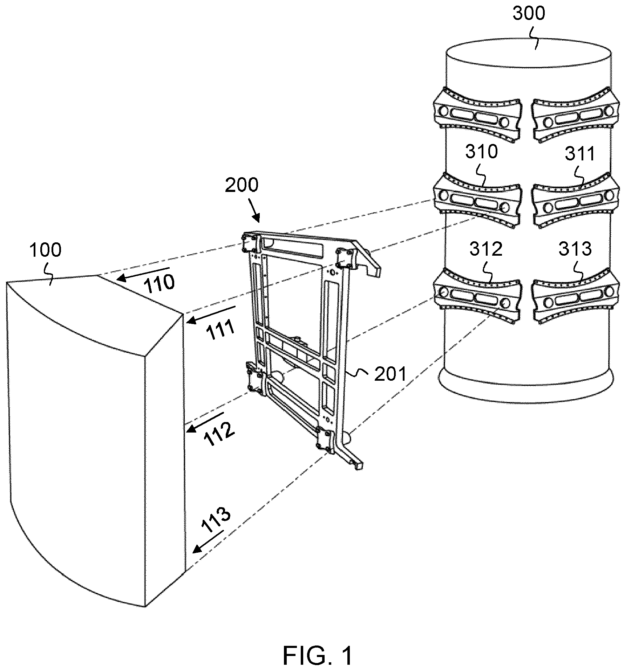

**Fig. 1** shows a **separation adapter 200** for attaching a **payload 100** onto a **payload dispenser 300** according to some embodiments.

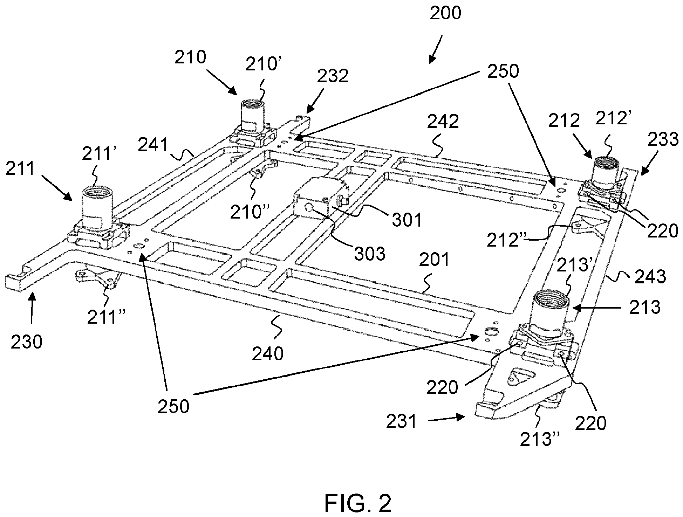

The payload 100 may here be any form of payload that is to be securely fastened to the payload dispenser 300 during launch and then be released once the space launch vehicle has reached a certain orbit or out in space. The payload may, for example, be a satellite, satellite arrangement, or a satellite forming a part of a satellite constellation, but may also be any other type of payload carrying equipment that is to be launched into space and subsequently separated from the space launch vehicle. The payload 100 comprise first separation adapter attachment means 110, 111, 112, 113. The first separation adapter attachment means 110, 111, 112, 113 are configured to be securely fastened, in a non-releasable manner, to releasable parts 210', 211', 212', 213' of payload attachment means 210, 211, 212, 213 of the separation adapter 300 as described in more detail below with reference to Fig. 2.

The separation adapter 200 may comprise a rigid structure 201 that essentially may have any type of form, e.g. a quadratic, rectangular, octagonal or round frame shape, etc. The rigid structure 201 is preferably made of a light-weight material in order to reduce weight of the separation adapter 200. For example, aluminium or other light-weight metallic material, or composite material, may be used. The term rigid is in the present context to be understood as providing enough structural support able to carry the payload 100 without being compromised, e.g. deform. The rigid structure 201 of the separation adapter 200 may also comprise, or fitted with, a number of different types of sensors, such as, thermal sensors, vibration sensors, separation sensors, etc. This advantageously reduces the amount of brackets and connector needed on the payload dispenser 300, thus reducing the complexity of the payload dispenser 300.

It should also be noted that that, in some embodiments, the rigid structure 201 of the separation adapter 200 may also comprise a number electrical and data connections, such as, e.g. an electrical or data connection, arranged to provide an electrical and data connection between the payload 100 and the payload dispenser 300. This is advantageous since the releasable connections towards the payload 100 may have other requirements or configurations than the non-releasable connections towards the payload dispenser 300. Hence, by only requiring non-releasable connections towards the payload dispenser 300, the configuration of the payload dispenser 300 is simplified. For example, some extra connector brackets, interfaces or connectors may be removed. It also means that the electrical and data connections of the separation adapter 200 may connected to the payload 100 early in the production process, e.g. at a factory before arriving at the launch site, thus further reducing the amount of time needed to integrate the payload 100 onto the payload dispenser 300 at the launch site.

The payload dispenser 300 may be a separate or integrated stage or part of a space launch vehicle (not shown). For example, the payload dispenser 300 may be a separate stage arranged to be mounted and securely fastened to another stage of a space launch vehicle, e.g. a rocket stage. The payload dispenser 300 comprise second separation adapter attachment means 310, 311, 312, 313. The second separation adapter attachment means 310, 311, 312, 313 are arranged on the payload dispenser 300 so as to correspond to at least one payload dispenser attachment means 220 of the separation adapter 200 as described in more detail below with reference to Fig. 2. The second separation adapter attachment means 310, 311, 312, 313 are configured to be securely fasten, in a non-releasable manner, to the at least one payload dispenser attachment means 220 of the separation adapter 200.

A more detailed description of the separation adapter 200 is described below in reference to Figs. 2-8. Some further features of the payload 100 and the payload dispenser 300 are also described below.

**Fig. 2** shows a perspective view of an example of a separation adapter 200 according to some embodiments. Here, the separation adapter 200 comprise a rigid structure 201 in the form of an essentially rectangular frame.

The rigid structure 201 may comprise a plurality of **payload attachment means 210, 211, 212, 213.** In the example shown in Fig. 2, there are four (4) payload attachment means 210, 211, 212, 213. Each of the payload attachment means 210, 211, 212, 213 is adapted to securely fasten the payload 100 to the rigid structure 201 in a releasable manner. Each of the payload attachment means 210, 211, 212, 213 may operate separately and individually from the other payload attachments means 210, 211, 212, 213. The payload attachment means 210, 211, 212, 213 may also be referred to as Hold Down and Release Mechanisms, HDRMs.

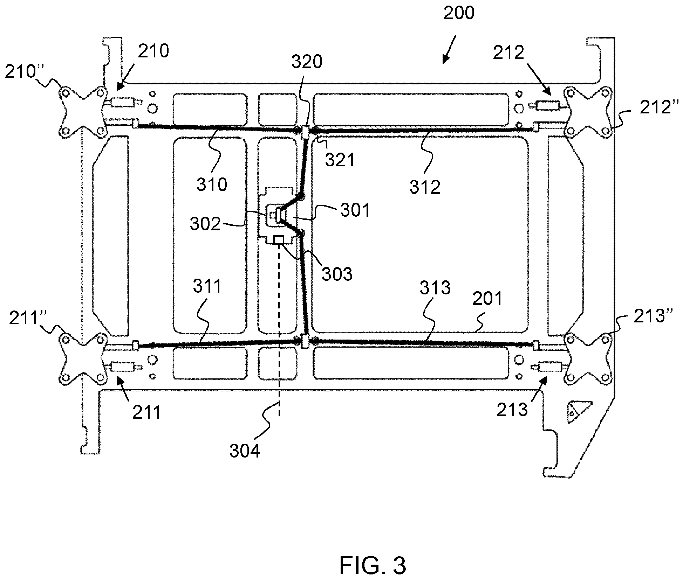

In some embodiments, each of the payload attachment means 210, 211, 212, 213 comprise a **non-releasable part 210', 211', 212', 213'** and a **releasable part 210", 211", 212", 213".** The non-releasable parts 210', 211', 212', 213' of the payload attachment means 210, 211, 212, 213 are configured to be securely fastened, in a non-release manner, to the rigid structure 201 of the separation adapter 200. The releasable parts 210", 211", 212", 213" of the payload attachment means 210, 211, 212, 213 are configured to be securely fastened, in a non-releasable manner, onto the payload 100 via the first separation adapter attachment means 110, 111, 112, 113. For example, the releasable part 210", 211", 212", 213" of each payload attachment means 210, 211, 212, 213 may be permanently fasten to the first separation adapter attachment means 110, 111, 112, 113 of the payload 100 using, for example, fixed fastening means or fasteners, such as, nuts and bolts, screws, etc. According to one example, the first separation adapter attachment means 110, 111, 112, 113 of the payload 100 may comprise threaded holes arranged to receive threaded bolts via a holes in the releasable parts 210", 211", 212", 213" of the payload attachment means 210, 211, 212, 213. In this example, it should be noted that the non-releasable parts 210', 211', 212', 213' and releasable parts 210", 211", 212", 213" of the payload attachment means 210, 211, 212, 213 are exemplified as a separation nut mechanism, the function of which are described in more detail below with reference to Figs. 3-7C.

Furthermore, the rigid structure 201 comprise at least one **payload dispenser attachment means 220.** Here, the at least one payload dispenser attachment means 220 is adapted to securely attach the rigid structure 201 to the payload dispenser 300 in a non-releasable manner. In some embodiments, the at least one payload dispenser attachment means 220 comprises one or more apertures or threaded holes in the rigid structure 201 arranged to engage with corresponding second separation adapter attachment means 310, 311, 312, 313 located on the payload dispenser 300. For example, the one or more apertures or threaded holes in the rigid structure 201 may be used to engage the second separation adapter attachment means 310, 311, 312, 313 of the payload dispenser 300 using, for example, fixed fastening means or fasteners, such as, nuts and bolts, screws, etc. Alternatively, according to some embodiments, the at least one payload dispenser attachment means 220 is arranged to engage with corresponding second separation adapter attachment means 310, 311, 312, 313 located on the payload dispenser 300 by a snap-fit mechanism (not shown). This alternatively would advantageously even further reduce the assembly lead time of mounting the payload 100 onto the payload dispenser 300.

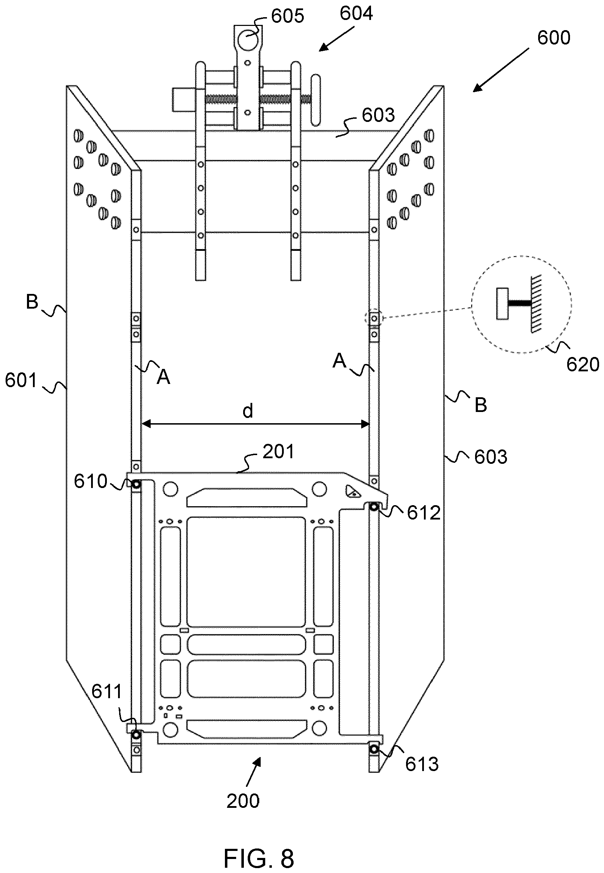

In some embodiments, the rigid structure 201 may further comprise a plurality of **holding portions 230, 231, 232, 233.** The plurality of holding portions 230, 231, 232, 233 allows the rigid structure 201 to be manually or mechanically lifted alone or together with the payload 100 in a secure manner after the payload 200 has been securely fastened to the rigid structure 201. This means that payload 100 advantageously does not have to be equipped or provided with any holding means or handling grips, etc. According to some embodiments, each of the plurality of holding portions 230, 231, 232, 233 may protrude from one or more **side portions 240, 241, 242, 243** of the rigid structure 201. Here, each of the plurality of holding portions 230, 231, 232, 233 may be configured to engage with and be supported by a corresponding plurality of holding portions 610, 611, 612, 613 on a pair of rails 601, 602 of a mounting tool 600. The mounting tool 600 and the configuration of the holding portions 230, 231, 232, 233 is described in more detail below with reference to Fig. 8.

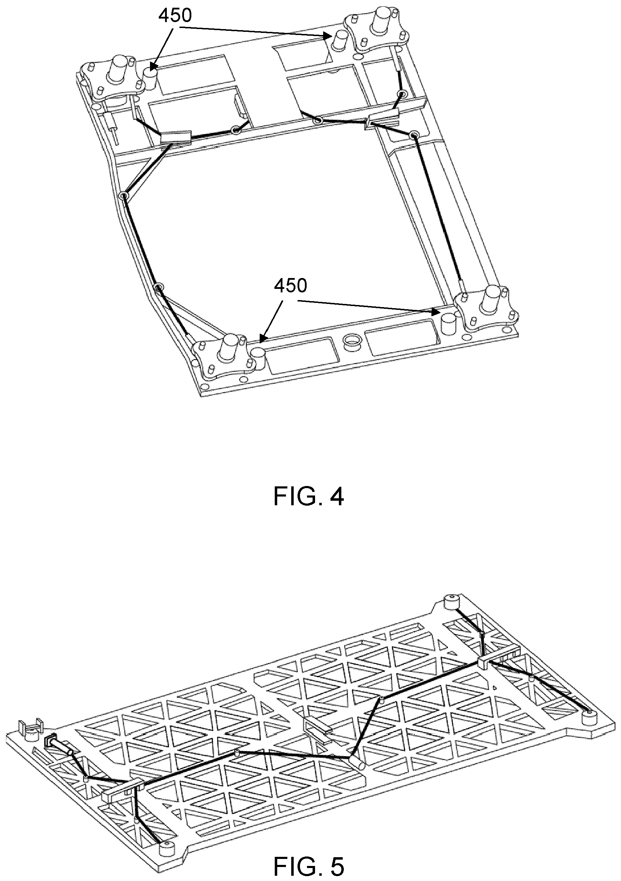

According to some embodiments, the rigid structure 201 may further be mounted with one or more **separation springs 450** (illustrated in Fig. 4) adapted to exert a push-off force onto the payload 100 once the payload 100 has been securely fastened to the rigid structure 201 in a releasable manner. For example, the rigid structure 201 may further comprise **apertures or threaded holes 250** through which separation springs 450 may fastened. Furthermore, according to some embodiments, the rigid structure 201 may further comprise central relaxation means 301 and communications interface 304. A more detailed description of the central activation arrangement 301, 302, 303, 304, 310, 311, 312, 313, 320, 321, 330, 331, 332, 333 comprising the central relaxation means 301 and the communications interface 304 is described in more detail below with reference to Figs. 3-5.

**Fig. 3** shows a side view of an example of a separation adapter 200 and a **central activation arrangement 301, 302, 303, 304, 310, 311, 312, 313, 320, 321** according to some embodiments. This side view illustrates a view of the separation adapter 200 as seen from a payload 100 perspective.

According to some embodiments, the central activation arrangement 301, 302, 303, 304, 310, 311, 312, 313, 320, 321, 330, 331, 332, 333 may comprise a **central relaxation means 301, 302,** a **communications interface 303, a communication link 304,** and a **tension wire arrangement 310, 311, 312, 313, 320, 321.**

Each payload attachment means 210, 211, 212, 213 is attached to the tension wire arrangement 310, 311, 312, 313, 320, 321. The tension wire arrangement 310, 311, 312, 313, 320, 321 comprise a number of **tension wires 310, 311, 312, 313,** each connecting one of the payload attachment means 210, 211, 212, 213, respectively, to the central relaxation means 301, 302. The tension wires 310, 311, 312, 313 are configured to be put under tension so as to exert a drag or pulling force onto each of the payload attachment means 210, 211, 212, 213, that enables each of the payload attachment means 210, 211, 212, 213 to securely hold the releasable part 210", 211", 212", 213" of each of the payload attachment means 210, 211, 212, 213, respectively. This means that as long as the tension remains on the tension wires 310, 311, 312, 313, each of the payload attachment means 210, 211, 212, 213 will securely hold the releasable part 210", 211", 212", 213" of each of the payload attachment means 210, 211, 212, 213, respectively. In other words, the tension wires 310, 311, 312, 313 will hold each of the releasable part 210", 211", 212", 213" of each of the payload attachment means 210, 211, 212, 213 in its locked state during launch and once the tension in the tension wires 310, 311, 312, 313 is relaxed, so is the releasable part 210", 211", 212", 213" of each of the payload attachment means 210, 211, 212, 213. This allows a simultaneous release of all of the releasable parts 210", 211", 212", 213" of each of the payload attachment means 210, 211, 212, 213.

Each of the tension wires 310, 311, 312, 313 may also be guided along the rigid structure 201 of the separation adapter 200 via **guiding means 320, 321.** The guiding means 320, 321 may, for example, be tension wires connectors 320 or guiding rings 321 adapted to hold the tension wires 310, 311, 312, 313 to the rigid structure 201 and keep tension wires 310, 311, 312, 313 from getting entangled after the tension wire arrangement 310, 311, 312, 313, 320, 321 is relaxed.

Upon receiving a trigger signal, e.g. via the communication interface 303, the central relaxation means 301, 302 is adapted to relax the tension wire arrangement 310, 311, 312, 313, 320, 321, i.e. relax or remove the tension of the tension wires 310, 311, 312, 313. The central relaxation means 301, 302 may comprise a **housing 301** and an **actuator 302.** The tension wires 310, 311, 312, 313 are guided into the housing 301 and connected to the actuator 302 that is located within the housing 301. The actuator 302 may be adapted to release the tension wires 310, 311, 312, 313, or the tension in the tension wires 310, 311, 312, 313, upon initiation. The actuator 302 may also be configured to be actuated or initiated upon receiving the trigger signal via the communication link 304. In some embodiments, the communication link 304 may comprise a communication interface 303 adapted to be connected in a non-releasable manner to an umbilical connector cable 304. Here, the umbilical connector cable 304 may also be connected to a communication interface (not shown) on the payload dispenser 300 in a non-releasable manner. Optionally, in some embodiments, the communication interface 303 may be adapted to receive the trigger signal over a wireless communication interface. This means that the communication interface 303 may be configured to receive wireless communications signals from a wireless transmitter, wherein the transmitter may be located on and/or in the payload dispenser 300, or elsewhere on the space launch vehicle. The wireless communication may, for example, be based on Bluetooth, WiFi, or any other suitable wireless communications technology.

In some embodiments, the actuator 302 may, for example, be a single pyrotechnical initiator. Optionally, in some embodiments, the actuator 302 may be a so-called "pin puller". A pin puller is adapted to pull a pin releasing the tension wires 310, 311, 312, 313 upon receiving an electrical or pyrotechnical trigger signal. Alternatively, according to some embodiments, the actuator 302 may have other commonly used designs, such as, a wire cutter mechanism, a bolt cutter mechanism, a separation nut mechanism, etc.

One of the advantages of having a separation adapter 200 with a central activation arrangement 301, 302, 303, 304, 310, 311, 312, 313, 320, 321, 330, 331, 332, 333 as described in the embodiments above is that it significantly reduces the number of actuators needed per payload. This is because, in the prior art, each HDRM or separation nut mechanism is usually equipped with at least one individual actuator. This means that, in case of having four HDRMs as described in the example in Fig. 3, the number of actuators are reduced by at least 75% according to the embodiments herein. According to another example, a separation nut is commonly activated by two pyrotechnical initiators. Consequently, this means that, in case of having four HDRMs as described in the examples in Figs. 2-3, there would conventionally be eight (8) such pyrotechnical initiators. This means that on a payload dispenser 300 configured for a large number of payloads, e.g. seventy (70), the total number of pyrotechnical initiators is needed are very large, e.g. 8 x 70 = 560. Since each pyrotechnical initiator is expensive, the total pyrotechnical initiator cost would be significant.

A further advantage of having separation adapter 200 with a central activation arrangement 301, 302, 303, 304, 310, 311, 312, 313, 320, 321, 330, 331, 332, 333 as described in the embodiments above is that, in case of having pyrotechnical initiators, the pyrotechnical signals would also be mechanically disconnected from the payload attachment means 210, 211, 212, 213. This means that induced chocks or disruption forces that may be transferred into the payload attachment means 210, 211, 212, 213 by the pyrotechnical initiators would be removed or at least significantly reduced. This may be of significant importance since a payload 100, such as, e.g. a satellite, may comprise highly sensitive equipment that could be damaged by such induced chocks or disruption forces.

It should also be noted that the central activation arrangement 301, 302, 303, 304, 310, 311, 312, 313, 320, 321, 330, 331, 332, 333 may also be arranged on components or devices other than the separation adapter 200. This means that the central activation arrangement 301, 302, 303, 304, 310, 311, 312, 313, 320, 321, 330, 331, 332, 333 may be configured to work in essentially the same manner for any number of the payload attachment means 210, 211, 212, 213, wherein the number of the payload attachment means 210, 211, 212, 213 are arranged on a component or device other than the separation adapter 200, e.g. directly onto a payload dispenser.

**Figs. 4-5** shows further examples of a separation adapter 200 and central activation arrangement 301, 302, 303, 304, 310, 311, 312, 313, 320, 321 according to some embodiments.

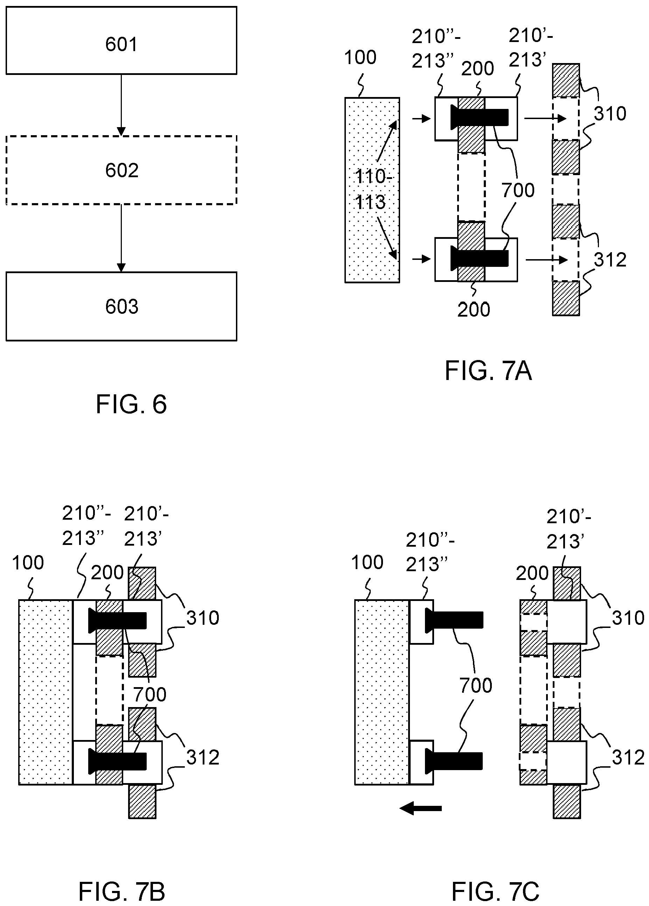

Examples of embodiments of a method for attaching a payload 100 onto a payload dispenser 300 using a separation adapter 200, will now be described with reference to the flowchart depicted in **Fig. 6****.** The method may comprise the following steps/actions.

**Action 601.** First, a plurality of payload attachment means 210, 211, 212, 213 of the separation adapter 200 is fastened to a plurality of first separation adapter attachment means 110, 111, 112, 113 located on the payload 100 in a releasable manner, i.e. via the releasable parts 210', 211', 212', 213' of the payload attachment means 210, 211, 212, 213. This is e.g. shown by the left arrows in Fig. 7A. It is of significant advantage that this Action 601 may be performed early in the production process, e.g. at a factory before arriving at the launch site, thus reducing the amount of time needed to integrate the payload 100 onto the payload dispenser 300 at the launch site. This may also include interconnecting any releasable electrical or data connections between the payload 100 and the separation adapter 200.

**Action 602.** Optionally, prior to the attachment in Action 603, the separation adapter 200 carrying the payload 100 may be suspended, via a corresponding plurality of holding portions 230, 231, 232, 233 of the separation adapter 200, onto a plurality of holding portions 610, 611, 612, 613 on a pair of rails 601, 602 of a mounting tool 600. A more detailed description of the mounting tool 600 is described below in reference to Fig.8.

**Action 603.** Subsequent to the fastening in Action 601, or optionally after the suspension in Action 602, the separation adapter 200 carrying the payload 100 is attached onto the payload dispenser 300 via at least one payload dispenser attachment means 220, 221 and corresponding second separation adapter attachment means 310, 311, 312, 313 in a non-releasable fixed manner. This is e.g. shown by the right arrows in Fig. 7A. Here, it should be noted that Actions 603, and optionally Action 602, will be performed at the launch site. This may also include interconnecting any non-releasable electrical or data connections between the separation adapter 200 and the payload dispenser 300.

One of the advantages of the separation adapter 200 according to the embodiments herein is that the separation adapter 200 may also be attached to the payload 100 at any time in the production flow. This is a great benefit for the logistics. For example, if the separation adapter 200 is attached to the payload 100 at the payload factory, the required operations at the launch site may be minimized. This is advantageous since launch site operations are usually very expensive, e.g. due to limited available equipment, amount of floor space, manpower, etc. Hence, the method for attaching a payload 100 onto a payload dispenser 300 using a separation adapter 200 allows for an improved logistic scheme of the mounting the payload 100 onto the payload dispenser 300.

**Fig. 7A** illustrates how the payload 100 may be mounted onto the separation adapter 200 and attached to the payload dispenser 300 according to some embodiments. Here, the payload 100 may be attached to the releasable part 210", 211", 212", 213" of the payload attachment means 210, 211, 212, 213 of the separation adapter 200 in a non-releasable manner via the first separation adapter attachment means 110, 111, 112, 113. The releasable part 210", 211", 212", 213" of the payload attachment means 210, 211, 212, 213 is here exemplified as comprising a **separation nut 700,** wherein the payload attachment means 210, 211, 212, 213 are exemplified as a separation nut mechanism. Here, it should be noted that various types of separation nut mechanisms are known and commonly used in the prior art. The separation adapter 200 may then be fastened, in a non-releasable manner, to the second separation adapter attachment means 310, 311, 312, 313 of the payload dispenser 300 via the at least one payload dispenser attachment means 220 (not shown in Fig. 7A).

**Fig. 7B** illustrates how the separation adapter 200 with the attached payload 100 is mounted onto the payload dispenser 300 before release. The payload attachment means 210, 211, 212, 213 will here ensure that the releasable part 210", 211", 212", 213", 700 of each payload attachment means 210, 211, 212, 213, respectively, is in a secure hold during launch, i.e. before release.

**Fig. 7C** illustrates how the payload 100 is separated from the separation adapter 200 and the payload dispenser 300 after release. Upon release, the payload attachment means 210, 211, 212, 213 will simultaneously loosen its grip of the releasable part 210", 211", 212", 213", 700 of each payload attachment means 210, 211, 212, 213, respectively, and allow the payload 100 together with the releasable part 210", 211", 212", 213", 700 of each payload attachment means 210, 211, 212, 213 to move away from the payload dispenser 300 leaving the non-releasable parts 210', 211', 212', 213' of the payload attachment means 210, 211, 212, 213 and the separation adapter 200 still attached to the payload dispenser 300. Here, according to some embodiments, the one or more separation springs 450 adapted to exert a push-off force onto the payload 100 may ensure that the payload 100 together with the releasable part 210", 211", 212", 213", 700 of each payload attachment means 210, 211, 212, 213 to move away from the payload dispenser 300.

**Fig. 8** illustrates a mounting tool 600 adapted to carry a separation adapter 200 according to some embodiments. The mounting tool 600 may comprise a holding arrangement 604 for supporting two rails 601, 602. The holding arrangement 604 may comprise a crossbeam 603 and a lifting means 605. The lifting means 605 may allow for the mounting tool 600 to be lifted, e.g. by a crane or working machine. The crossbeam 603 be attached to the two rails 601, 602 allowing a separation distance, d, between the front ends, A, of the rails 601, 602. Here, it should be noted that the separation distance, d, between the front ends, A, of the rails 601, 602 may preferably be shorter than the separation distance between the back ends, B, of the rails 601, 602. This supports the movability of the payload 100 in all directions and enables an easier mounting of the payload 100 onto the payload dispenser 300. The front ends, A, of the rails 601, 602 comprise a plurality of holding portions 610, 611, 612, 613 adapted to support the corresponding plurality of holding portions 230, 231, 232, 233 of the rigid structure 201 of the separation adapter 200. The holding portions 230, 231, 232, 233 may, for example, be protrusions extending out from the rails 601, 602 or indentations into the rails 601, 602.

The description of the example embodiments provided herein have been presented for purposes of illustration. The description is not intended to be exhaustive or to limit example embodiments to the precise form disclosed, and modifications and variations are possible in light of the above teachings or may be acquired from practice of various alternatives to the provided embodiments. The examples discussed herein were chosen and described in order to explain the principles and the nature of various example embodiments and its practical application to enable one skilled in the art to utilize the example embodiments in various manners and with various modifications as are suited to the particular use contemplated. The features of the embodiments described herein may be combined in all possible combinations of methods, apparatus, modules, and systems. It should be appreciated that the example embodiments presented herein may be practiced in any combination with each other.

It should be noted that the word "comprising" does not necessarily exclude the presence of other elements or steps than those listed and the words "a" or "an" preceding an element do not exclude the presence of a plurality of such elements. It should further be noted that any reference signs do not limit the scope of the claims, that the example embodiments may be implemented at least in part by means of both hardware and software, and that several "means", "units" or "devices" may be represented by the same item of hardware.

The embodiments herein are not limited to the above described preferred embodiments. Various alternatives, modifications and equivalents may be used. Therefore, the above embodiments should not be construed as limiting.

## Claims

1. A separation adapter (200) for attaching a payload (100) onto a payload dispenser (300), **characterized in that** the separation adapter (200) comprise
a rigid structure (201) comprising:
a plurality of payload attachment means (210, 211, 212, 213), wherein each payload attachment means (210, 211, 212, 213) operates separately from the other payload attachments means (210, 211, 212, 213) and is adapted to securely fasten the payload (100) to the rigid structure (201) in a releasable manner, and
at least one payload dispenser attachment means (220), wherein the at least one payload dispenser attachment means (220) is adapted to securely attach the rigid structure (201) to the payload dispenser (300) in a non-releasable fixed manner.

2. The separation adapter (200) according to claims 1, wherein the at least one payload dispenser attachment means (220) comprises one or more apertures or threaded holes in the rigid structure (201) arranged to engage with corresponding second separation adapter attachment means (310, 311, 312, 313) located on the payload dispenser (300).

3. The separation adapter (200) according to claim 1, wherein the at least one payload dispenser attachment means (220) is arranged to engage with corresponding second separation adapter attachment means (310, 311, 312, 313) located on the payload dispenser (300) by a snap-fit mechanism.

4. The separation adapter (200) according to any of claims 1-3, wherein the rigid structure (201) further comprise a plurality of holding portions (230, 231, 232, 233), wherein the plurality of holding portions (230, 231, 232, 233) allows the rigid structure (201) to be manually or mechanically lifted together with the payload (100) in a secure manner after the payload (200) has been securely fastened to the rigid structure (201).

5. The separation adapter (200) according to claim 4, wherein each of the plurality of holding portions (230, 231, 232, 233) protrude from one or more side portions (240, 241, 242, 243) of the rigid structure (201), wherein each of the plurality of holding portions (230, 231, 232, 233) are configured to engage with and be supported by a corresponding plurality of holding portions (610, 611, 612, 613) on a pair of rails (601, 602) of a mounting tool (600).

6. The separation adapter (200) according to any of claims 1-5, wherein the plurality of payload attachment means (210, 211, 212, 213) are arranged to release the payload (100) simultaneously via a central activation arrangement (301, 302, 303, 304, 310, 311, 312, 313, 320, 321, 330, 331, 332, 333).

7. The separation adapter (200) according to claim 6, wherein the central activation arrangement comprise a central relaxation means (301, 302) connected to each of the payload attachment means (210, 211, 212, 213) via a tension wire arrangement (310, 311, 312, 313, 320, 321).

8. The separation adapter (200) according to claim 7, wherein the central relaxation means (301, 302) is arranged to relax the tension wire arrangement (310, 311, 312, 313, 320, 321) upon receiving a trigger signal via a communication link (303, 304).

9. The separation adapter (200) according to claim 8, wherein the communication link comprise a communication interface (303) adapted to be connected to an umbilical connector cable (304), and/or a communication interface (303) adapted to receive the trigger signal over a wireless communication interface.

10. The separation adapter (200) according to any of claims 7-9, wherein each payload attachment means (210, 211, 212, 213) is adapted to release a part (210", 211", 212", 213"; 700) of the payload attachment means (210, 211, 212, 213) that is fastened to the payload (100) as the tension wire arrangement (310, 311, 312, 313, 320, 321) is relaxed.

11. The separation adapter (200) according to any of claims 1-10, further comprising one or more separation springs (450) adapted to exert a push-off force onto the payload (100) once the payload (100) has been securely fastened to the rigid structure (201).

12. The separation adapter (200) according to any of claims 1-11, further comprising one or more releasable electric and data connections configured to be connected to the payload (100), and one or more non-releasable electric and data connections configured to be connected to the payload dispenser (300).

13. The separation adapter (200) according to any of claims 1-12, wherein the payload (100) is a satellite, constellation satellite or satellite arrangement, and the payload dispenser (300) is, or forms part of, a stage of satellite launch vehicle.

14. A method for attaching a payload (100) onto a payload dispenser (300) using a separation adapter (200) according any of claim 1-12, the method comprising the steps of:
*fastening* (601) a plurality of payload attachment means (210, 211, 212, 213) of the separation adapter (200) to a plurality of first separation adapter attachment means (110, 111, 112, 113) located on the payload (100) in a releasable manner, and
subsequent to the *fastening* (601), *attaching* (603) the separation adapter (200) carrying the payload (100) onto the payload dispenser (300) via at least one payload dispenser attachment means (220, 221) and corresponding second separation adapter attachment means (310, 311, 312, 313) in a non-releasable fixed manner.

15. The method according to claim 13, further comprising the step of:
prior to the *attaching* (603), *suspending* (602) the separation adapter (200) carrying the payload (100), via a corresponding plurality of holding portions (230, 231, 232, 233) of the separation adapter (200), onto a plurality of holding portions (610, 611, 612, 613) on a pair of rails (601, 602) of a mounting tool (600).

16. A payload dispenser (300) for carrying a payload (100) of a satellite launch vehicle, wherein the payload dispenser (100) is configured to be attached to a separation adapter (200) according any of claim 1-12.
